# FASCICULE DE BREVET EUROPEEN

(11) **EP 4 101 299 B1**
(45) Date de publication et mention de la délivrance du brevet: **21.05.2025**
(21) Numéro de dépôt: 22178048.9
(22) Date de dépôt: 09.06.2022
(51) Int. Cl.: A22C 21/02

(54) **PORTE DOIGTS POUR UNE PLUMEUSE DE VOLAILLES**
FINGERHALTER FÜR EINEN GEFLÜGELRUPFER
PLUCKING FINGERS FOR A POULTRY PLUCKING MACHINE

(30) Priorité: 10.06.2021 FR 2106112
(43) Date de publication de la demande: 14.12.2022
(73) Titulaire: Plumatech, 22940 Plaintel (FR)
(72) Inventeur: LE MEAUX, Franck, 22940 PLAINTEL (FR)
(74) Mandataire: Cabinet Le Guen Maillet

(56) Documents cités:
- FR-A1- 2 019 911
- US-B2- 7 066 805

## Description

### DOMAINE TECHNIQUE

La présente invention concerne un porte doigts pour une plumeuse de volailles, ainsi qu'une plumeuse de volailles comportant au moins un tel porte doigts.

### ÉTAT DE LA TECHNIQUE ANTÉRIEURE

Pour plumer une volaille, il est connu d'utiliser une plumeuse. Une plumeuse est une machine qui comporte une pluralité de portes doigts et chaque porte doigts est muni d'une pluralité de doigts. Chaque doigt est classiquement réalisé dans un matériau souple et peut prendre différentes formes.

Pour chaque porte doigt, la plumeuse présente un arbre sur lequel le porte doigts est fixé. Grâce à un système de motorisation, chaque arbre est entraîné en rotation, et le contact entre la volaille et les doigts en rotation arrache les plumes de la volaille.

Actuellement, un porte doigts prend la forme d'une platine circulaire qui est traversée par une pluralité d'alésages et présente au centre une empreinte dont la forme correspond à la forme de l'arbre pour assurer l'emmanchement de la platine sur l'arbre. La platine est ensuite fixée à l'arbre par une vis.

Lorsqu'un doigt est usé, il est nécessaire de le remplacer. Dans le cadre des portes doigts actuellement utilisés, il est nécessaire de démonter le porte doigts de son arbre, de retirer le doigt usé, de remonter un doigt neuf et de remonter la platine. Le démontage et le remontage de la platine sont des opérations relativement longues durant lesquelles la plumeuse est immobilisée.

En outre, la face de la platine qui est à l'opposé des doigts présente de nombreuses anfractuosités, en particulier du fait des alésages, dans lesquelles des déchets se fixent et le nettoyage nécessite alors également le démontage de chaque platine.

Il est donc nécessaire de trouver un arrangement qui permet un gain de temps, en particulier pour remplacer les doigts usés.

Les documents US 7 066 805 B2 et FR 2 019 911 divulguent des portes doigts de l'état de la technique.

### EXPOSE DE L'INVENTION

Un objet de la présente invention est de proposer un porte doigts pour une plumeuse, où le porte doigts comporte une platine et un couvercle qui porte les doigts et est fixé de manière amovible sur la platine.

À cet effet, est proposé un porte doigts pour une plumeuse, ledit port doigts étant prévu pour être mis en rotation autour d'un axe de rotation et comportant :
- une platine comportant des moyens de fixation destinés à fixer la platine à un arbre de la plumeuse,
- un couvercle qui chapeaute une face frontale de la platine et comporte une pluralité d'alésages, où chaque alésage est destiné à recevoir un doigt de la plumeuse, et
- un système de verrouillage distinct des moyens de fixation et qui prend alternativement une position de verrouillage dans laquelle il verrouille le couvercle sur la platine ou une position de déverrouillage dans laquelle il ne verrouille pas le couvercle sur la platine,
où le couvercle comporte une calotte qui recouvre la face frontale de la platine et des pans s'étendant perpendiculairement à la calotte, et où la platine comporte pour chaque pan, un évidement dans lequel loge ledit pan.

Avantageusement, le système de verrouillage est un tiroir qui coulisse selon une direction de déplacement pour passer de la position de déverrouillage à la position de verrouillage, la platine comporte un tunnel traversant et s'étendant perpendiculairement à l'axe de rotation, le couvercle présente deux logements, chaque logement est disposé à une des extrémités du tunnel, et en position de verrouillage, la première extrémité loge dans le premier logement, la deuxième extrémité loge dans le deuxième logement et la partie centrale loge dans le tunnel.

Avantageusement, chaque logement est intégré à un pan.

Avantageusement, le premier logement est constitué de deux rainures périphériques réalisées dans un premier pan, pour chaque rainure périphérique, la première extrémité du tiroir comporte une nervure qui loge dans ladite rainure périphérique, et le deuxième logement est constitué d'une fenêtre réalisée dans un deuxième pan.

Avantageusement, le porte doigts comporte un système de blocage débrayable qui bloque le tiroir par rapport à la platine en position de verrouillage.

Avantageusement, le système de blocage comporte :
- deux bras flexibles avec une première extrémité et une deuxième extrémité, où la première extrémité est solidaire du tiroir, où la deuxième extrémité s'étend dans la direction de déplacement à partir de la première extrémité, et les deux deuxièmes extrémités s'écartent l'une de l'autre à partir des premières extrémités et en suivant la direction de déplacement,
- pour chaque bras, une butée solidaire de la platine, où en position de verrouillage, chaque deuxième extrémité est contrainte contre une butée, et
- un moyen de tirage prévu pour permettre le tirage du tiroir selon une direction inverse à la direction de déplacement.

Avantageusement, chaque deuxième extrémité porte un crochet solidaire de la deuxième extrémité et en position de déverrouillage, chaque crochet vient en butée contre la butée associée à ladite deuxième extrémité.

L'invention propose également une plumeuse de volailles comportant au moins un arbre, un système de motorisation entraînant chaque arbre en rotation, pour chaque arbre, un porte doigts selon l'une des variantes précédentes, où la platine est fixée audit arbre par les moyens de fixation, et pour chaque alésage, un doigt inséré dans ledit alésage.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective d'un porte doigts selon l'invention,
[Fig. 2] est une vue de côté d'un doigt selon un exemple de réalisation,
[Fig. 3] est une vue éclatée du porte doigts selon l'invention,
[Fig. 4] est une vue de derrière du porte doigts selon l'invention,
[Fig. 5] est une vue en coupe par le plan V de la Fig. 1 du porte doigts selon l'invention, et
[Fig. 6] est une vue en coupe par le plan VI de la Fig. 4.

### EXPOSÉ DÉTAILLÉ DE MODES DE RÉALISATION

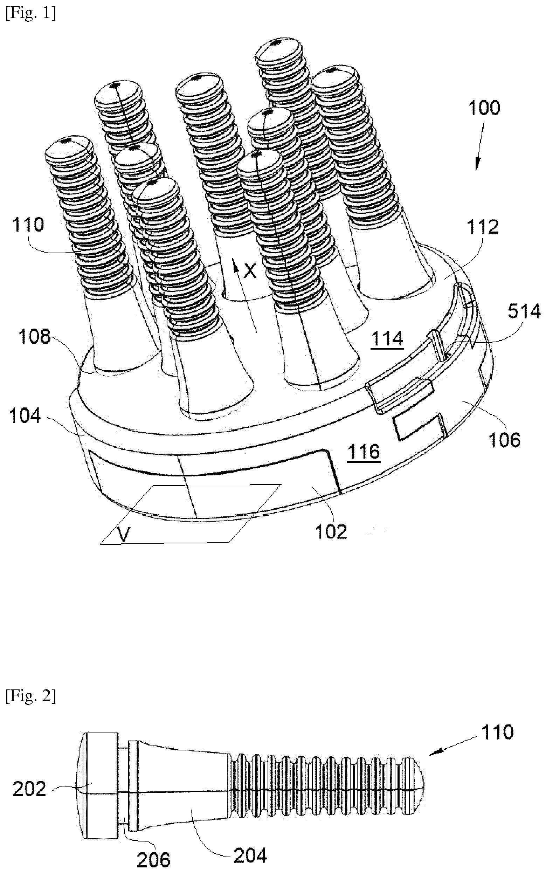

La Fig. 1 montre un porte doigts 100 selon l'invention pour une plumeuse de volailles.

Le porte doigts 100 comporte une platine 102, un couvercle 104 et un système de verrouillage 106.

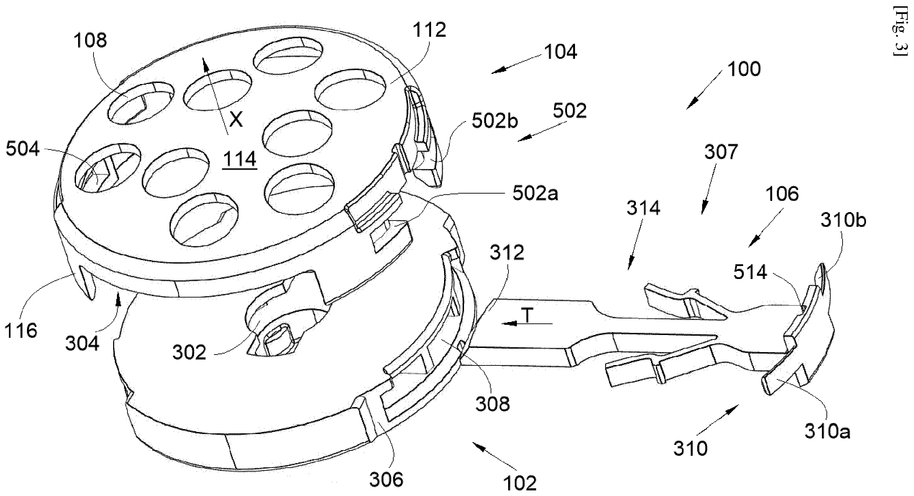

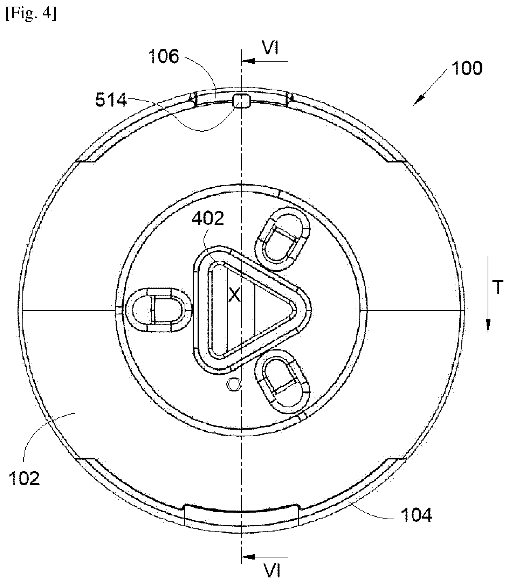

La Fig. 3 montre une vue éclatée du porte doigts 100 et la Fig. 4 montre une vue de derrière du porte doigts 100.

En utilisation, la platine 102 est fixée à un arbre de la plumeuse grâce à des moyens de fixation de la platine 102, et l'arbre est entraîné en rotation autour de son axe par un système de motorisation. La platine 102 est alors entraînée en rotation autour d'un axe de rotation X correspondant à l'axe de l'arbre après assemblage.

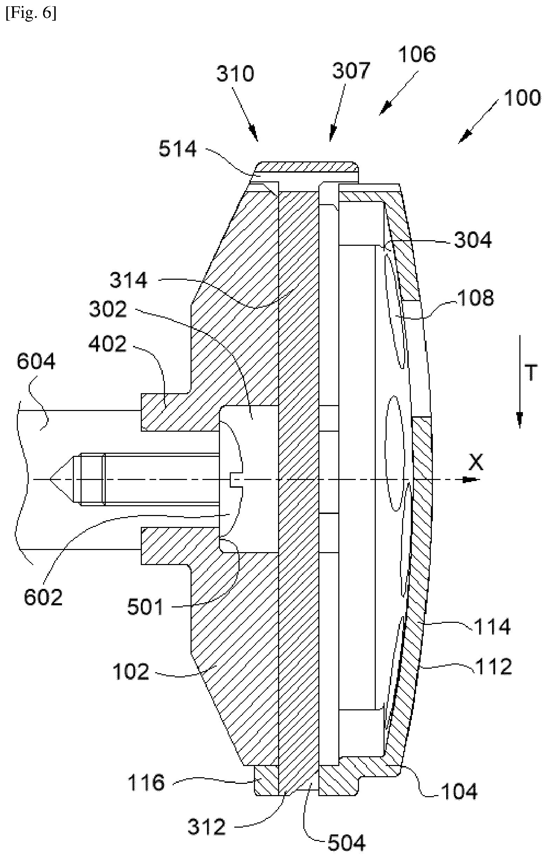

Dans le mode de réalisation de l'invention présenté ici, pour empêcher la rotation de la platine 102 par rapport à l'arbre, la platine 102 présente, au niveau d'une face arrière, un manchon 402 dont la forme évidée intérieure, ici triangulaire, est complémentaire à la forme de l'arbre. Ainsi, le manchon 402 s'emmanche sur l'arbre et la complémentarité des formes intérieure du manchon 402 et extérieure de l'arbre empêche la rotation de la platine 102 par rapport à l'arbre. Comme le montre plus particulièrement la Fig. 6, pour assurer la solidarisation de la platine 102 sur l'arbre 604 de la plumeuse, la platine 102 présente un puits 302 qui traverse la platine 102 parallèlement à l'axe de rotation X et prolonge la forme évidée intérieure du manchon 402, permettant la mise en place d'une vis 602 qui se visse sur l'extrémité de l'arbre 604 logé dans le manchon 402 et dont la tête vient en appui contre un épaulement 501 du puits 302. Bien sûr d'autres moyens de solidarisation sont possibles entre l'arbre 604 et la platine 102.

Ainsi, dans le mode de réalisation de l'invention présenté ici, les moyens de fixation comprennent des moyens de blocage qui empêchent la rotation de la platine 102 par rapport à l'arbre et des moyens de solidarisation qui fixent la platine 102 à l'arbre 604. Ici, les moyens de blocage sont le manchon 402 et les moyens de solidarisation sont le puits 302, l'épaulement 501 et la vis 602.

Le couvercle 104 chapeaute une face frontale de la platine 102 et comporte une pluralité d'alésages 108, où chaque alésage 108 reçoit un doigt 110.

La face frontale de la platine 102 est la face opposée à la face arrière et elle est ici perpendiculaire à l'axe de rotation X. La face frontale est la face à partir de laquelle les doigts 110 vont s'étendre.

Le couvercle présente une face intérieure 304 orientée vers la face frontale de la platine 102 et une face extérieure 112 orientée à l'opposé. La face frontale de la platine 102 est ainsi recouverte par le couvercle 104.

La Fig. 2 montre un exemple d'un doigt 110 qui comporte une rainure circulaire 206 qui sépare le doigt 110 en un sabot 202 et une tige 204. Le doigt 110 est réalisé dans un matériau souple et la mise en place du doigt 110 consiste à introduire l'extrémité libre de la tige 204 dans l'alésage 108 depuis la face intérieure 304 jusqu'à forcer l'introduction des bords de l'alésage 108 dans la rainure circulaire 206. Le sabot 202 se trouve alors du côté de la face intérieure 304 et la tige 204 du côté de la face extérieure 112.

Le système de verrouillage 106 prend alternativement une position de verrouillage dans laquelle il verrouille le couvercle 104 sur la platine 102 ou une position de déverrouillage dans laquelle il ne verrouille pas le couvercle 104 sur la platine 102 et le couvercle 104 peut alors se séparer de la platine 102.

Ainsi, lorsqu'un doigt 110 doit être changé, il suffit de déplacer le système de verrouillage 106 en position de déverrouillage pour libérer le couvercle 104, retirer le doigt 110 du couvercle 104, remettre un nouveau doigt 110 sur le couvercle 104, puis repositionner le couvercle 104 sur la platine 102 et déplacer le système de verrouillage 106 en position de verrouillage. Toutes ces manipulations s'effectuent en laissant la platine 102 fixée à l'arbre, ce qui simplifie le travail du technicien. Ainsi, dans l'invention décrite ici, les moyens de fixation et le système de verrouillage 106 sont des éléments distincts et indépendants.

En outre, en réalisant une platine 102 en pièce moulée sans aspérité et sans perçage pour recevoir les doigts 110, la face arrière, celle qui ici porte la manchon 402 peut être lisse pour éviter les dépôts de déchets, ce qui facilite le nettoyage à l'arrière du porte doigts 100.

Pour limiter les risques de rotation du couvercle 104 par rapport à la platine 102, le couvercle 104 comporte une calotte 114 qui recouvre la face frontale de la platine 102 et des pans 116 solidaires de la calotte 114 et s'étendant globalement perpendiculairement à la calotte 114, c'est-à-dire parallèlement à l'axe de rotation X pour former une jupe autour de la calotte 114.

La platine 102 comporte alors pour chaque pan 116, un évidement 306 dans lequel loge ledit pan 116.

Les pans 116 sont ici sur le pourtour de la calotte 114 et les évidements 306 consistent en des diminutions du diamètre de la platine 102.

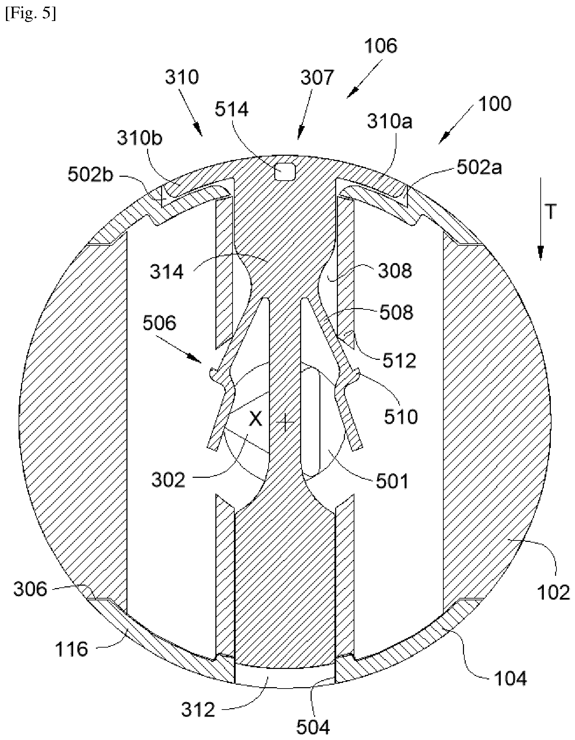

Les Figs. 5 et 6 montrent des coupes du porte doigts 100.

Dans le mode de réalisation de l'invention présenté ici, le système de verrouillage 106 prend la forme d'un tiroir 307.

La platine 102 comporte un tunnel 308 qui est traversant, qui s'étend perpendiculairement à l'axe de rotation X et dans lequel coulisse le tiroir 307.

Le couvercle 104 présente deux logements 502 et 504 et chaque logement 502, 504 est disposé à une des extrémités du tunnel 308.

Le tiroir 307 présente une première extrémité 310, une deuxième extrémité 312 et une partie centrale 314 entre la première extrémité 310 et la deuxième extrémité 312.

Ainsi, lorsque le tiroir 307 est mis en position de verrouillage, la première extrémité 310 loge dans le premier logement 502, la deuxième extrémité 312 loge dans le deuxième logement 504 et la partie centrale 314 loge dans le tunnel 308 assurant ainsi le verrouillage du couvercle 104 sur la platine 102.

Le déplacement du tiroir 307 entre la position de verrouillage et 1a position de déverrouillage est ainsi une translation perpendiculairement à l'axe de rotation X.

Les logements 502 et 504 sont ici diamétralement opposés par rapport à l'axe de rotation X.

Dans le mode de réalisation de l'invention présenté ici, chaque logement 502, 504 est intégré à un pan 116.

Le premier logement 502 est ici constitué de deux rainures périphériques 502a-b réalisées dans un premier pan 116 et entre lesquelles passe le tiroir 307, et pour chaque rainure périphérique 502a-b, la première extrémité 310 du tiroir 307 comporte une nervure 310a-b qui loge dans ladite rainure périphérique 502a-b.

Le deuxième logement 504 est ici constitué d'une fenêtre réalisée dans un deuxième pan 116 et dans laquelle passe la deuxième extrémité 312 du tiroir 307.

Dans le mode de réalisation de l'invention présenté sur la Fig. 5, le passage de la position de déverrouillage à la position de verrouillage est une translation selon une direction de déplacement T allant ici du premier logement 502 vers le deuxième logement 504. Inversement, le passage de la position de verrouillage à la position de déverrouillage est une translation selon une direction inverse à la direction de déplacement T.

Pour assurer le blocage en translation du tiroir 307 lorsqu'il est en position de verrouillage et ainsi prévenir un déplacement non souhaité dudit tiroir 307 vers la position de déverrouillage, le porte doigts 100 comporte un système de blocage 506 qui bloque le tiroir 307 par rapport à la platine 102 et qui est débrayable pour autoriser le déplacement vers la position de déverrouillage.

Dans le mode de réalisation de l'invention présenté ici, le système de blocage 506 comporte deux bras 508 flexibles avec une première extrémité et une deuxième extrémité, où la première extrémité est solidaire du tiroir 307, et plus particulièrement ici de 1a partie centrale 314, et pour chaque bras 508, une butée 512 solidaire de la platine 102 et avec laquelle la deuxième extrémité du bras 508 coopère pour bloquer le tiroir 307 en position de verrouillage.

Dans le mode de réalisation de l'invention représenté à la Fig. 5, chaque butée 512 est constituée par une extrémité d'une paroi du tunnel 308.

Pour chaque bras 508, la deuxième extrémité s'étend dans la direction de déplacement T à partir de la première extrémité, et les deux deuxièmes extrémités s'écartent l'une de l'autre à partir des premières extrémités et en suivant la direction de déplacement T.

En position de repos des bras 508, l'écartement entre les deux deuxièmes extrémités est supérieur à l'écartement entre les deux butées 512. En s'écartant, chaque bras 504 vient en appui contre une des butées 512 assurant ainsi un frottement qui stoppe le tiroir 307 lorsqu'aucune force suffisante n'est appliquée sur le tiroir 307. Ainsi, en position de verrouillage, chaque deuxième extrémité est contrainte contre une butée 512.

Pour permettre le passage de la position de verrouillage à la position de déverrouillage, le système de blocage 506 comporte également un moyen de tirage 514 qui permet à un technicien de tirer sur le tiroir 307 selon une direction inverse par rapport à la direction de translation T pour le faire passer de la position de verrouillage à la position de déverrouillage. Ainsi, en tirant sur le tiroir 307, le technicien force le rapprochement des deux deuxièmes extrémités et le déplacement du tiroir 307 vers la position de déverrouillage avec les sorties des nervures 310a-b des rainures périphériques 502a-b et la sortie de la deuxième extrémité 312 du deuxième logement 504, permettant le retrait du couvercle 104.

Le moyen de tirage 514 est ici une cavité dans laquelle un outil, tel qu'un tournevis, peut être introduit, mais il est également possible de prévoir une poignée pouvant être saisie directement par le technicien.

Pour éviter la perte du tiroir 307, lorsqu'il est en position de déverrouillage, chaque deuxième extrémité porte un crochet 510 solidaire de la deuxième extrémité qui vient, en position de déverrouillage, en butée contre la butée 512 associée à ladite deuxième extrémité et empêche le retrait complet du tiroir 307.

Pour un retrait complet du tiroir 307, il suffit au technicien de pincer les deux bras 508 pour dégager les crochets 510.

Dans le mode de réalisation de l'invention présenté sur les Figs., la platine 102 et le couvercle 104 prennent chacun globalement la forme d'un cylindre de révolution, mais d'autres formes sont envisageables.

## Revendications

1. Porte doigts (100) pour une plumeuse, ledit porte doigts (100) étant prévu pour être mis en rotation autour d'un axe de rotation (X) et comportant :
- une platine (102) comportant des moyens de fixation destinés à fixer la platine (102) à un arbre de la plumeuse,
- un couvercle (104) qui chapeaute une face frontale de la platine (102) et comporte une pluralité d'alésages (108), où chaque alésage (108) est destiné à recevoir un doigt (110) de la plumeuse, et
- un système de verrouillage (106) distinct des moyens de fixation et qui prend alternativement une position de verrouillage dans laquelle il verrouille le couvercle (104) sur la platine (102) ou une position de déverrouillage dans laquelle il ne verrouille pas le couvercle (104) sur la platine (102),
**caractérisé en ce que** le couvercle (104) comporte une calotte (114) qui recouvre la face frontale de la platine (102) et des pans (116) s'étendant perpendiculairement à la calotte (114), et où la platine (102) comporte pour chaque pan (116), un évidement (306) dans lequel loge ledit pan (116).

2. Porte doigts (100) selon la revendication 1, **caractérisé en ce que** le système de verrouillage (106) est un tiroir (307) qui coulisse selon une direction de déplacement (T) pour passer de la position de déverrouillage à la position de verrouillage, **en ce que** la platine (102) comporte un tunnel (308) traversant et s'étendant perpendiculairement à l'axe de rotation (X), **en ce que** le couvercle (104) présente deux logements (502, 504), **en ce que** chaque logement (502, 504) est disposé à une des extrémités du tunnel (308), et **en ce qu'**en position de verrouillage, la première extrémité (310) loge dans le premier logement (502), la deuxième extrémité (312) loge dans le deuxième logement (504) et la partie centrale (314) loge dans le tunnel (308).

3. Porte doigts (100) selon la revendication 2, **caractérisé en ce que** chaque logement (502, 504) est intégré à un pan (116).

4. Porte doigts (100) selon la revendication 3, **caractérisé en ce que** le premier logement (502) est constitué de deux rainures périphériques (502a-b) réalisées dans un premier pan (116), **en ce que** pour chaque rainure périphérique (502a-b), la première extrémité (310) du tiroir (307) comporte une nervure (310a-b) qui loge dans ladite rainure périphérique (502a-b), et **en ce que** le deuxième logement (504) est constitué d'une fenêtre réalisée dans un deuxième pan (116).

5. Porte doigts (100) selon l'une des revendications 2 à 4, **caractérisé en ce que** le porte doigts (100) comporte un système de blocage (506) débrayable qui bloque le tiroir (307) par rapport à la platine (102) en position de verrouillage.

6. Porte doigts (100) selon les revendications 4 et 5, **caractérisé en ce que** le système de blocage (506) comporte :
- deux bras (508) flexibles avec une première extrémité et une deuxième extrémité, où la première extrémité est solidaire du tiroir (307), où la deuxième extrémité s'étend dans la direction de déplacement (T) à partir de la première extrémité, et les deux deuxièmes extrémités s'écartent l'une de l'autre à partir des premières extrémités et en suivant la direction de déplacement (T),
- pour chaque bras (508), une butée (512) solidaire de la platine (102), où en position de verrouillage, chaque deuxième extrémité est contrainte contre une butée (512), et
- un moyen de tirage (514) prévu pour permettre le tirage du tiroir (307) selon une direction inverse à la direction de déplacement (T).

7. Porte doigts (100) selon la revendication 6, **caractérisé en ce que** chaque deuxième extrémité porte un crochet (510) solidaire de la deuxième extrémité et **en ce qu'**en position de déverrouillage, chaque crochet (510) vient en butée contre la butée (512) associée à ladite deuxième extrémité.

8. Plumeuse de volailles comportant au moins un arbre (604), un système de motorisation entraînant chaque arbre (604) en rotation, pour chaque arbre (604), un porte doigts (100) selon l'une des revendications précédentes, où la platine (102) est fixée audit arbre (604) par les moyens de fixation, et pour chaque alésage (108), un doigt (110) inséré dans ledit alésage (108).

## Patentansprüche

1. Fingerhalter (100) für eine Rupfmaschine, wobei der Fingerhalter (100) dafür vorgesehen ist, um eine Drehachse (X) in Drehung versetzt zu werden und Folgendes beinhaltet:
- eine Platte (102), die Befestigungsmittel beinhaltet, die dazu bestimmt sind, die Platte (102) an einer Welle der Rupfmaschine zu befestigen,
- einen Deckel (104), der eine Vorderseite der Platte (102) bedeckt und eine Mehrzahl von Bohrungen (108) beinhaltet, wobei jede Bohrung (108) dazu bestimmt ist, einen Finger (110) der Rupfmaschine aufzunehmen, und
- ein Verriegelungssystem (106), das von den Befestigungsmitteln gesondert ist und das abwechselnd eine Verriegelungsposition, in der es den Deckel (104) auf der Platte (102) verriegelt, oder eine Entriegelungsposition, in der es den Deckel (104) auf der Platte (102) nicht verriegelt, einnimmt,
**dadurch gekennzeichnet, dass** der Deckel (104) eine Kalotte (114), die die Vorderseite der Platte (102) abdeckt, und Seitenstücke (116), die sich senkrecht zur Kalotte (114) erstrecken, beinhaltet, und wobei die Platte (102) für jedes Seitenstück (116) eine Aussparung (306) beinhaltet, in der das Seitenstück (116) aufgenommen ist.

2. Fingerhalter (100) nach Anspruch 1, **dadurch gekennzeichnet, dass** das Verriegelungssystem (106) ein Schieber (307) ist, der in einer Bewegungsrichtung (T) gleitet, um aus der Entriegelungsposition in die Verriegelungsposition zu wechseln, dadurch, dass die Platte (102) einen durchgehenden Tunnel (308) beinhaltet, der sich senkrecht zur Drehachse (X) erstreckt, dadurch, dass der Deckel (104) zwei Aufnahmen (502, 504) aufweist, dadurch, dass jede Aufnahme (502, 504) an einem der Enden des Tunnels (308) angeordnet ist, und dadurch, dass in der Verriegelungsposition das erste Ende (310) in der ersten Aufnahme (502) aufgenommen ist, das zweite Ende (312) in der zweiten Aufnahme (504) aufgenommen ist und der Mittelabschnitt (314) im Tunnel (308) aufgenommen ist.

3. Fingerhalter (100) nach Anspruch 2, **dadurch gekennzeichnet, dass** jede Aufnahme (502, 504) in ein Seitenstück (116) integriert ist.

4. Fingerhalter (100) nach Anspruch 3, **dadurch gekennzeichnet, dass** die erste Aufnahme (502) von zwei Umfangsrillen (502a-b) gebildet ist, die in einem ersten Seitenstück (116) ausgebildet sind, dadurch, dass für jede Umfangsrille (502a-b) das erste Ende (310) des Schiebers (307) eine Rippe (310a-b) beinhaltet, die in der Umfangsrille (502a-b) aufgenommen ist, und dadurch, dass die zweite Aufnahme (504) von einem Fenster gebildet ist, das in einem zweiten Seitenstück (116) ausgebildet ist.

5. Fingerhalter (100) nach einem der Ansprüche 2 bis 4, **dadurch gekennzeichnet, dass** der Fingerhalter (100) ein auskuppelbares Blockiersystem (506) beinhaltet, das den Schieber (307) bezogen auf die Platte (102) in der Verriegelungsposition blockiert.

6. Fingerhalter (100) nach den Ansprüchen 4 und 5, **dadurch gekennzeichnet, dass** das Blockiersystem (506) Folgendes beinhaltet:
- zwei flexible Arme (508) mit einem ersten Ende und einem zweiten Ende, wobei das erste Ende mit dem Schieber (307) fest verbunden ist, wobei sich das zweite Ende ausgehend von dem ersten Ende in der Bewegungsrichtung (T) erstreckt und sich die zwei zweiten Enden ausgehend von den ersten Enden und in der Bewegungsrichtung (T) voneinander entfernen,
- für jeden Arm (508) einen Anschlag (512), der mit der Platte (102) fest verbunden ist, wobei in der Verriegelungsposition jedes zweite Ende gegen einen Anschlag (512) gespannt ist, und
- ein Zugmittel (514), das dafür vorgesehen ist, das Ziehen des Schiebers (307) in einer Richtung zu ermöglichen, die der Bewegungsrichtung (T) entgegengesetzt ist.

7. Fingerhalter (100) nach Anspruch 6, **dadurch gekennzeichnet, dass** jedes zweite Ende einen Haken (510) trägt, der mit dem zweiten Ende fest verbunden ist, und dadurch, dass in der Verriegelungsposition jeder Haken (510) an dem Anschlag (512) anliegt, der dem zweiten Ende zugeordnet ist.

8. Geflügelrupfmaschine, aufweisend wenigstens eine Welle (604), ein Antriebssystem, das jede Welle (604) drehend antreibt, für jede Welle (604) einen Fingerhalter (100) nach einem der vorhergehenden Ansprüche, wobei die Platte (102) durch die Befestigungsmittel an der Welle (604) befestigt ist, und für jede Bohrung (108) einen Finger (110), der in die Bohrung (108) eingeführt ist.

## Claims

1. Finger holder (100) for a plucker, said finger holder (100) being intended to be set in rotation about an axis of rotation (X) and having:
- a mounting plate (102) having fastening means intended for fastening the mounting plate (102) to a shaft of the plucker,
- a cover (104) which caps a frontal face of the mounting plate (102) and has a plurality of bores (108), wherein each bore (108) is intended to receive a finger (110) of the plucker, and
- a locking system (106) which is separate from the fastening means and takes up either a locking position, in which it locks the cover (104) on the mounting plate (102), or an unlocking position, in which it does not lock the cover (104) on the mounting plate (102),
**characterized in that** the cover (104) has a cap (114) which covers the frontal face of the mounting plate (102) and tabs (116) extending perpendicularly to the cap (114), and wherein the mounting plate (102) has, for each tab (116), a recess (306) in which said tab (116) is accommodated.

2. Finger holder (100) according to Claim 1, **characterized in that** the locking system (106) is a slide (307) which slides in a direction of movement (T) in order to pass from the unlocking position to the locking position, **in that** the mounting plate (102) has a tunnel (308) that passes through it and extends perpendicularly to the axis of rotation (X), **in that** the cover (104) has two housings (502, 504), **in that** each housing (502, 504) is disposed at one of the ends of the tunnel (308), and **in that** in the locking position, the first end (310) is accommodated in the first housing (502), the second end (312) is accommodated in the second housing (504) and the central part (314) is accommodated in the tunnel (308).

3. Finger holder (100) according to Claim 2, **characterized in that** each housing (502, 504) is incorporated into a tab (116).

4. Finger holder (100) according to Claim 3, **characterized in that** the first housing (502) is made up of two peripheral slots (502a-b) made in a first tab (116), **in that**, for each peripheral slot (502a-b), the first end (310) of the slide (307) has a rib (310a-b) which is accommodated in said peripheral slot (502a-b), and **in that** the second housing (504) is formed of a window made in a second tab (116).

5. Finger holder (100) according to one of Claims 2 to 4, **characterized in that** the finger holder (100) has a disengageable immobilizing system (506) which immobilizes the slide (307) with respect to the mounting plate (102) in the locking position.

6. Finger holder (100) according to Claims 4 and 5, **characterized in that** the immobilizing system (506) has:
- two flexible arms (508) with a first end and a second end, wherein the first end is integral with the slide (307), wherein the second end extends in the direction of movement (T) starting from the first end, and the two second ends extend away from one another starting from the first ends and following the direction of movement (T),
- for each arm (508), a stop (512) integral with the mounting plate (102), wherein in the locking position, each second end is constrained against a stop (512), and
- a pulling means (514) provided to allow the slide (307) to be pulled in an opposite direction to the direction of movement (T).

7. Finger holder (100) according to Claim 6, **characterized in that** each second end bears a hook (510) integral with the second end, and **in that** in the unlocking position, each hook (510) comes into abutment against the stop (512) associated with said second end.

8. Poultry plucker having at least one shaft (604), a motorization system driving each shaft (604) in rotation, for each shaft (604), a finger holder (100) according to one of the preceding claims, wherein the mounting plate (102) is fastened to said shaft (604) by the fastening means, and for each bore (108), a finger (110) inserted into said bore (108).
